# EUROPÄISCHE PATENTSCHRIFT

(11) **EP 1 951 561 B1**
(45) Veröffentlichungstag und Bekanntmachung des Hinweises auf die Patenterteilung: **29.12.2010**
(21) Anmeldenummer: 06793506.4
(22) Anmeldetag: 14.09.2006
(51) Int. Cl.: B60S 1/38

(54) **WISCHGUMMI**
WIPER BLADE RUBBER
BALAI D'ESSUIE-GLACE

(30) Priorität: 14.11.2005 DE 102005054142
(43) Veröffentlichungstag der Anmeldung: 06.08.2008
(73) Patentinhaber: ROBERT BOSCH GMBH, 70442 Stuttgart (DE)
(72) Erfinder: WILMS, Christian, B-3582 Koersel-Beringen (BE); VERELST, Hubert, B-3300 Tienen (BE); WYNEN, Paul, B-3910 Neerpelt (BE); VAN VINCKENROYE, Liesbet, B-3300 Tienen (BE); BUSEYNE, Wim, B-3500 Hasselt (BE); STEVENS, Luc, B-3001 Heverlee (BE)
(86) Internationale Anmeldenummer: PCT/EP2006/066353
(87) Internationale Veröffentlichungsnummer: WO 2007/054389

(56) Entgegenhaltungen:
- EP-A- 1 418 100
- DE-A1- 10 007 809
- FR-A1- 2 846 926
- US-A- 4 847 940

## Beschreibung

### Stand der Technik

Die Erfindung geht von einem Wischgummi nach dem Oberbegriff des Anspruchs 1 aus.

Aus der DE 198 27 032 A1 ist ein Wischgummi bekannt, das eine Kopfleiste aufweist, die über einen Kippsteg mit einer Wischleiste verbunden ist. Die Wischleiste liegt mit ihrer Wischlippe an einer Fahrzeugscheibe an und kippt bei einer Wischbewegung um den Kippsteg. Dabei stützt sie sich mit einer der Kopfleiste zugewandten Keilschulter an dieser ab. In der Kopfleiste ist ein zentraler Aufnahmekanal für eine Federschiene vorgesehen. Auf der der Fahrzeugscheibe zugewandten Seite der Federschiene befindet sich in der Kopfleiste ein Längskanal, der im Querschnitt die angenäherte Form eines T hat und dessen vertikaler Teil durch den Kippsteg in die

Wischleiste hineinragt. Bei einer Varianten hat der Querschnitt des Längskanals die Form eines angenäherten Doppel-T, wobei an den Enden eines gemeinsamen vertikalen Teils jeweils ein Quersteg angeordnet ist und der zweite Quersteg im Bereich einer Keilschulter der Wischleiste liegt. Der Längskanal lässt eine leichte Deformierung des Wischgummis zu, wenn sich die Wischleiste bei der Wischbewegung umlegt. Somit können Veränderungen der Höhe des Wischblattgummis unterdrückt werden, und ein grelles Umlegegeräusch wird reduziert. Gleichzeitig wird ein geeigneter Neigungswinkel der umgelegten Wischleiste zur Windschutzscheibe gehalten.

Aus der DE 195 24 108 A1 ist ein Wischgummi mit einer Kopfleiste und einer Wischleiste bekannt, die über einen Kippsteg miteinander verbunden sind. In der Kopfleiste und/oder Wischleiste ist ein geschlossener Längskanal vorgesehen, in den eine Füllung eingelassen ist, die leichter verformbar ist als das Material des Wischgummis und/oder zumindest teilweise plastisch ist. Für die Füllung sind insbesondere hoch viskose Flüssigkeiten geeignet, z.B. Silikonöle. Die Bewegung beim Umlegen der Wischleiste wird durch die Füllung gedämpft und die Geräusche werden vermindert.

Ferner ist aus der DE 197 45 686 A1 ein Wischgummi bekannt, dessen Kopfleiste einen mit einer Flüssigkeit oder einem Gas gefüllten Längskanal aufweist. Dieser kann durch mehrere Längsrippen unterteilt sein. An der konvexen Außenseite des Längskanals rollt beim Umlegen der Wischleiste die zugewandte Fläche der Keilschulter der Wischleiste ab. Durch diese Maßnahmen wird das Umlegegeräusch vermindert.

Aus der EP-A-1418100 ist ein Wischgummi mit den Merkmalen des Oberbegriffs des Anspruchs 1 bekannt.

### Vorteile der Erfindung

Nach der Erfindung besitzt der Längskanal der Kopfleiste einen im Wesentlichen rechteckigen oder ovalen Querschnitt, dessen längste Erstreckung etwa senkrecht zum Kippsteg verläuft, wobei die elastische Nachgiebigkeit des Wischgummis in Mittelstellung der Wischleiste bei einer Belastung von 17 N/m in Richtung des Kippstegs und senkrecht zur Auflagefläche größer als 0,075 mm ist. Die Angaben beziehen sich sowohl auf eine Zugbelastung als auch auf eine Druckbelastung. Durch die größere Nachgiebigkeit des erfindungsgemäßen Wischgummis gegenüber üblichen Gummiprofilen erreicht man, dass der Wischgummi bei dem Umlegevorgang seiner Wischleiste eine sehr geringe Hubbewegung ausführt. Gleichzeitig wird vermieden, dass bei Auftreten von Zugkräften der Kontakt zur Fahrzeugscheibe verloren geht. Außerdem bleibt der Neigungswinkel der umgelegten Wischleiste gegenüber der Fahrzeugscheibe im Vergleich zu üblichen Wischgummis erhalten. Der übliche Neigungswinkel hat sich in der Praxis als günstig erwiesen. Da sich die Keilschulter beim erfindungsgemäßen Wischgummi in der umgelegten Lage der Wischleiste im Bereich der relativ steifen Seitenwände des Längskanals an der Kopfleiste sicher abstützen kann, ist der Neigungswinkel während der Wischbewegung bis auf die Umkehrlagen annähernd konstant.

Die Dicke der Seitenwände und des Bodens des Längskanals beträgt vorteilhafter Weise 0,5 mm bis 1 mm. Sie wird auf das Material, insbesondere die Härte des Wischgummis, abgestimmt, sodass die oben angegebenen Werte erreicht werden.

Um eine Überbeanspruchung des Wischgummis im Bereich des Längskanals zu vermeiden, z.B. durch dynamische Kräfte, Schmutz, Schnee oder Eis, besitzt der Boden des Längskanals einen dachförmigen Querschnitt, dessen mittlerer Teil einen Anschlagsattel bildet. Dieser liegt über dem Kippsteg und weist im unbelasteten Zustand einen Abstand von etwa 0,5 mm zur gegenüberliegenden Seite des Längskanals auf. Bei einer Überlast kann sich der Anschlagsattel an der gegenüberliegenden Seite des Längskanals abstützen.

Damit die Kräfte bei dem Umlegevorgang der Wischleiste über den Kippsteg in den Boden des Längskanals eingeleitet werden, ist zwischen den zur Kopfleiste gewandten Flächen der Keilschulter der Wischleiste und den unteren Anlageflächen des Bodens der Kopfleiste ein Freiraum vorgesehen, wobei die Flächen der Keilschultern zum Kippsteg hin dachförmig verlaufen und in der Mittelstellung der Wischleiste etwa parallel zu den unteren Anlageflächen sind. Die Dachneigung der Keilschultern und der unteren Anlageflächen des Bodens des Längskanals beträgt zweckmäßiger Weise etwa 14°.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 einen Querschnitt durch einen erfindungsgemäßen Wischgummi mit zwei Federschienen,
Fig..2 eine Variante zu Fig. 1 mit einer Federschiene,
Fig. 3 einen Querschnitt durch einen Wischgummi nach Fig. 1 mit einer umgelegten Wischleiste und
Fig. 4 eine Variante zu Fig. 1 mit einem im Querschnitt ovalen Längskanal.

### Beschreibung der Ausführungsbeispiele

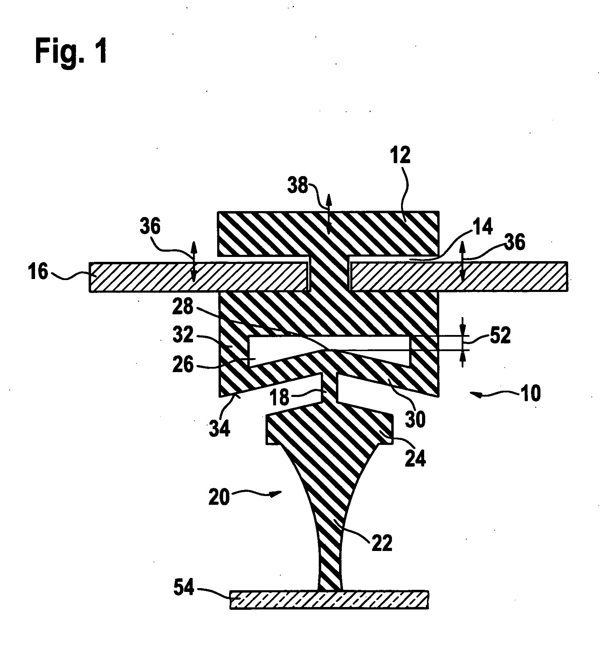

Ein Wischgummi 10 besitzt eine Kopfleiste 12 und eine Wischleiste 20, die über einen Kippsteg 18 miteinander verbunden sind. Bei der Ausführung nach Fig. 1 sind im oberen Teil der Kopfleiste 12 zur Aufnahme zweier Federschienen 16 seitliche Längsnuten 14 vorgesehen, wie sie für Flachbalkenwischblätter bekannt sind. Schmalere Federschienen 16 werden bei Wischblättern mit einem Tragbügelsystem verwendet. Die Kopfleiste 12 besitzt zwischen den seitlichen Längsnuten 14 und dem Kippsteg 18 einen Längskanal 26, der einen im Wesentlichen rechteckigen Querschnitt aufweist, wobei die im Vergleich zum Boden 30 kürzeren Seitenwände 32 in der dargestellten Mittellage der Wischleiste 20 etwa parallel zum Kippsteg 18 verlaufen. Der Boden 30 verläuft im Querschnitt dachförmig zum Kippsteg 18 hin, wobei die Dachneigung ϕ im Bereich von 14° liegt. An der Innenseite des Bodens 30 befindet sich im Bereich des Kippstegs 18 ein Anschlagsattel 28, der von der gegenüberliegenden Seite des Längskanals 26 einen Abstand 52 aufweist, der im unbelasteten Zustand zweckmäßigerweise etwa 0,5 mm beträgt.

Die Wischleiste 20 besitzt Keilschultern 24, an die sich eine Wischlippe 22 anschließt. Diese liegt im Betrieb an einer Fahrzeugscheibe 54 an. Die der Kopfleiste 12 zugewandten Flächen der Keilschultern 24 verlaufen in der dargestellten Mittelstellung der Wischleiste 20 unter der gleichen Dachneigung ϕ zum Kippsteg 18 wie der Boden 30 hin, sodass diese Flächen parallel zu den unteren Anlageflächen 34 des Bodens 30 verlaufen und einen durch den Kippsteg 18 bestimmten Freiraum für die Kippbewegung der Wischleiste 20 bilden.

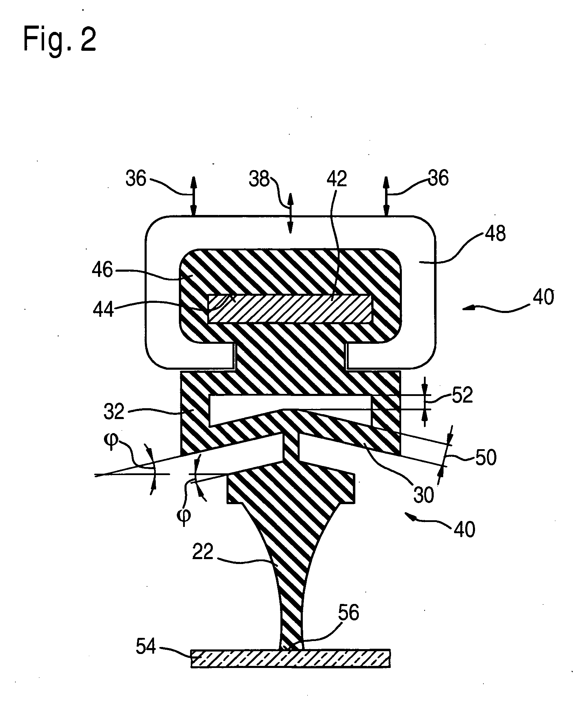

Die Ausführung nach Fig. 2 unterscheidet sich von der Ausführung nach Fig. 1 dadurch, dass der Wischgummi 40 in seiner Kopfleiste 46 einen zentralen Aufnahmekanal 44 für eine Federschiene 42 aufweist. Der Aufnahmekanal 44 und die Federschiene 42 werden von einer Anschlussvorrichtung 48 für einen nicht dargestellten Wischarm umfasst. Die Anschlussvorrichtung 48 ist nur schematisch dargestellt. Sie variiert je nach dem, ob der Wischgummi 40 für ein Flachbalkenwischblatt oder für ein Wischblatt mit einem Tragbügelsystem verwendet wird.

Die Wandstärken 50 der Seitenwände 32 und des Bodens 30 liegen etwa in einem Bereich von 0,5 mm bis 1 mm und sind auf die Elastizität bzw. Härte des Werkstoffs des Wischgummis 10, 40 so abgestimmt, dass bei einer Belastung 36 von 17 N/m sich eine Verschiebung 38 von mehr als 0,075 mm ergibt. Dabei wird die Auflagefläche 56 zwischen der Wischlippe 22 und der Fahrzeugscheibe 54 als Einspannstelle betrachtet.

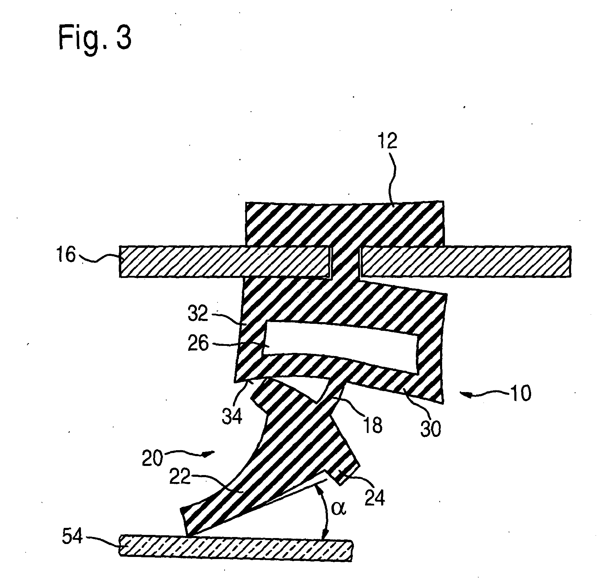

Fig. 3 zeigt einen Wischgummi 10 mit einer gekippten Wischleiste 20. Bei der Umlegebewegung hat sich der Boden 30 des Längskanals 26 gestreckt und sich der Abstand 52 von der gegenüberliegenden Seite deutlich vergrößert. Dadurch wurden die Hubbewegung des Wischgummis 1 verringert und Umlegegeräusche vermieden. Gleichzeitig bleibt der günstige Neigungswinkel α zwischen der Wischlippe 22 und der Fahrzeugscheibe 54 erhalten, da sich die Keilschulter 24 im Bereich der Seitenwand 32 sicher an der unteren Anlagefläche des Bodens 30 abstützen kann.

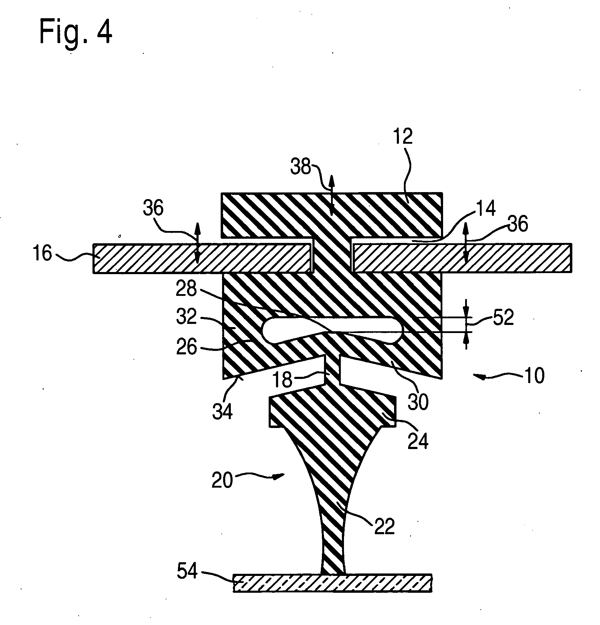

Bei dem Ausführungsbeispiel nach Fig. 4 ist die Querschnittsform des Längskanals 26 im Unterschied zu den Fig. 1 bis 3 oval.

## Patentansprüche

1. Wischgummi (10, 40) mit einer Kopfleiste (12, 46), die mindestens eine Aufnahme (14, 44) für eine Federschiene (16, 42) besitzt und über einen Kippsteg (18) mit einer Wischleiste (20) verbunden ist, wobei die Kopfleiste (12, 46) in dem dem Kippsteg (18) benachbarten Bereich einen Längskanal (26) hat, wobei der Längskanal (26) einen im Wesentlichen rechteckigen Querschnitt besitzt, dessen längste Erstreckung etwa senkrecht zum Kippsteg (18) verläuft, und wobei der Boden (30) des Längskanals (26) einen dachförmigen Querschnitt besitzt, dessen mittlerer Teil einen Anschlagsattel (28) bildet, der über dem Kippsteg (18) liegt und im unbelasteten Zustand einen Abstand (52) von etwa 0,5 mm zur gegenüberliegenden Seite des Längskanals (26) aufweist **dadurch gekennzeichnet, dass** die elastische Nachgiebigkeit des Wischgummis (10, 40) in einer Mittelstellung der Wischleiste (20) bei einer Belastung von 17 N/m in Richtung des Kippstegs (18) und senkrecht zur Auflagefläche (56) größer als 0,075 mm ist, und die Wischleiste (20) eine Keilschulter (24) besitzt, deren zur Kopfleiste (12, 46) gewandten Flächen im Querschnitt dachförmig zum Kippsteg (18) hin und in der Mittelstellung der Wischleiste (20) etwa parallel zu den unteren Anlageflächen (34) des Bodens (30) der Kopfleiste (12, 46) verlaufen.

2. Wischgummi (10, 40) nach Anspruch 1, **dadurch gekennzeichnet, dass** die Dicke der Seitenwände (32) und des Bodens (30) des Längskanals (26) 0,5 bis 1 mm beträgt.

3. Wischgummi (10, 40) nach Anspruch 1 oder 2, **dadurch gekennzeichnet, dass** der Anschlagssattel (28) etwa die gleiche Breite besitzt wie der Steg (18).

4. Wischgummi (10, 40) nach einem der Ansprüche 1 bis 3, **dadurch gekennzeichnet, dass** die Dachneigung (ϕ) des Bodens (30) etwa 14 Grad beträgt.

## Claims

1. Wiper blade rubber (10, 40) with a head strip (12, 46) which has a least one receptacle (14, 44) for a spring rail (16, 42) and is connected to a wiper strip (20) via a tilting web (18), wherein the head strip (12, 46) has a longitudinal channel (26) in the region adjacent to the tilting web (18), wherein the longitudinal channel (26) has a substantially rectangular cross section, the longest extent of which runs approximately perpendicularly to the tilting web (18), and wherein the base (30) of the longitudinal channel (26) has a roof-shaped cross section, the central part of which forms a stop saddle (28) which is located above the tilting web (18) and, in the unloaded state, is at a distance (52) of approximately 0.5 mm from the opposite side of the longitudinal channel (26), **characterized in that** the elastic flexibility of the wiper blade rubber (10, 40) in a central position of the wiper strip (20) is greater than 0.075 mm at a loading of 17 N/m in the direction of the tilting web (18) and perpendicular to the bearing surface (56), and the wiper strip (20) has a wedge shoulder (24), the surfaces of which facing the head strip (12, 46) run in a roof-shaped manner in cross section towards the tilting web (18) and, in the central position of the wiper strip (20), run approximately parallel to the lower contact surfaces (34) of the base (30) of the head strip (12, 46).

2. Wiper blade rubber (10, 40) according to Claim 1, **characterized in that** the thickness of the side walls (32) and of the base (30) of the longitudinal channel (26) is 0.5 to 1 mm.

3. Wiper blade rubber (10, 40) according to Claim 1 or 2, **characterized in that** the stop saddle (28) has approximately the same width as the web (18).

4. Wiper blade rubber (10, 40) according to one of Claims 1 to 3, **characterized in that** the roof inclination (φ) of the base (30) is approximately 14 degrees.

## Revendications

1. Balai d'essuie-glace (10, 40) comprenant une raclette de tête (12, 46) qui possède au moins un logement (14, 44) pour un rail élastique (16, 42) et qui est connectée par le biais d'une nervure basculante (18) à une raclette d'essuie-glace (20), la raclette de tête (12, 46) présentant, dans la région adjacente à la nervure basculante (18), un canal longitudinal (26), le canal longitudinal (26) possédant une section transversale essentiellement rectangulaire, dont l'étendue la plus longue s'étend approximativement perpendiculairement à la raclette basculante (18), et le fond (30) du canal longitudinal (26) possédant une section transversale en forme de toit, dont la partie centrale forme une sellette de butée (28), qui est située au-dessus de la raclette basculante (18) et qui présente, dans l'état non sollicité, un écartement (52) d'environ 0,5 mm par rapport au côté opposé du canal longitudinal (26), **caractérisé en ce que** la flexibilité élastique du balai d'essuie-glace (10, 40) dans une position centrale de la raclette d'essuie-glace (20), dans le cas d'une sollicitation de 17 N/m dans la direction de la raclette basculante (18) et perpendiculairement à la surface d'appui (56) est supérieure à 0,075 mm et **en ce que** la raclette d'essuie-glace (20) possède un épaulement en forme de clavette (24), dont les surfaces tournées vers la raclette de tête (12, 46) s'étendent en section transversale en forme de toit par rapport à la raclette basculante (18) et dans la position centrale de la raclette d'essuie-glace (20) approximativement parallèlement aux surfaces d'appui inférieures (34) du fond (30) de la raclette de tête (12, 46).

2. Balai d'essuie-glace (10, 40) selon la revendication 1, **caractérisé en ce que** l'épaisseur des parois latérales (32) et du fond (30) du canal longitudinal (26) est de 0,5 à 1 mm.

3. Balai d'essuie-glace (10, 40) selon la revendication 1 ou 2, **caractérisé en ce que** la sellette de butée (28) possède approximativement la même largeur que la nervure (18).

4. Balai d'essuie-glace (10, 40) selon l'une quelconque des revendications 1 à 3, **caractérisé en ce que** la pente du toit (ϕ) du fond (30) vaut approximativement 14°.
